(19) Europäisches Patentamt
European Patent Office
Office européen des brevets

(11) Publication number: **0 476 597 A1**

# (12) EUROPEAN PATENT APPLICATION

(21) Application number: **91115774.1**

(22) Date of filing: **17.09.91**

(51) Int. Cl.$^5$: **C07F 7/08**

(30) Priority: **18.09.90 JP 247942/90**

(43) Date of publication of application:
**25.03.92 Bulletin 92/13**

(84) Designated Contracting States:
**DE FR GB**

(71) Applicant: **SHIN-ETSU CHEMICAL CO., LTD.**
**6-1, Ohtemachi 2-chome**
**Chiyoda-ku Tokyo(JP)**

(72) Inventor: **Takago, Toshio**
**94-7, Yanase**
**Annaka-shi, Gunma-ken(JP)**
Inventor: **Kishita, Hirofumi**
**Iryu Apartment 402, 3-19-1, Isobe**
**Annaka-shi, Gunma-ken(JP)**
Inventor: **Fujii, Hideki**
**Sakuragaoka-ryo 3-12-37, Isobe**
**Annaka-shi, Gunma-ken(JP)**

(74) Representative: **DIEHL GLAESER HILTL & PARTNER**
**Patentanwälte Flüggenstrasse 13**
**W-8000 München 19(DE)**

## (54) Process for preparing 1,1,3,3-tetramethyl-disiloxane.

(57) A process for preparing 1,1,3,3-tetramethyl-1,3-disiloxane comprising the step of reducing 1,1,3,3-tetramethyl-1,3-dichloro-1,3-disiloxane by use of a metal hydride such as lithium aluminum hydride, sodium aluminum hydride, etc. The process is extremely advantageous economically, and enables preparation of 1,1,3,3-tetramethyl-1,3-disiloxane in a remarkably high yield.

EP 0 476 597 A1

The present invention relates to a process for preparing 1,1,3,3-tetramethyl-1,3-disiloxane which is an important intermediate in the silicone industry.

Heretofore, 1,1,3,3-tetramethyl-1,3-disiloxane has been known as an intermediate, for example, for the preparation of organopolysiloxanes. Thus a process for preparing 1,1,3,3-tetramethyl-1,3-disiloxane at low cost is highly desirable.

Conventionally known processes for preparation of 1,1,3,3-tetramethyl-1,3-disiloxane include, for example, a process using hydrolysis of dimethylchlorosilane, and a process in which the Grignard synthesis is used to prepare 1,1,3,3-tetramethyl-1,3-disiloxane from a polysiloxane comprising

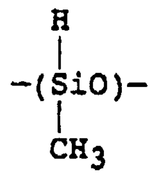 units

being terminated by $CH_3SiO_{1/2}$ units.

However, the former process has the drawback of by-products being formed in a large amount, leading to a low yield of the intended disiloxane upon isolation.

The latter process, on the other hand, has the problem that both the polysiloxane as starting material and the Grignard reagent used are expensive and difficult to deal with.

Accordingly, it is an object of the present invention to provide a process for preparing 1,1,3,3-tetramethyl-1,3-disiloxane in high yield through simple steps and at low cost.

In order to attain the above object, the present invention provides a process for preparing 1,1,3,3-tetramethyl-1,3-disiloxane comprising the step of reducing 1,1,3,3-tetramethyl-1,3-dichloro-1,3-disiloxane by use of a metal hydride.

According to the process of the present invention, it is possible to prepare 1,1,3,3-tetramethyl-1,3-disiloxane in an extremely high yield.

The process of the present invention involves only one reaction step, i.e., the reduction step, and is therefore extremely simple. Furthermore, the dichlorodisiloxane used as starting material in the process is industrially available at very low cost. Therefore, the process of the present invention is of great advantage on an economic basis, as well.

Figure 1 is a chart showing an infrared absorption spectrum of the reaction product obtained in Example 1 below; and

Figure 2 is a chart showing an infrared absorption spectrum of the reaction product obtained in Example 2 below.

## Starting material

The starting material used in the process of the present invention is 1,1,3,3-tetramethyl-1,3-dichloro-1,3-disiloxane. This compound is generally used as a starting monomer in synthesis of various organopolysiloxanes, and can be easily prepared by hydrolysis of dimethyldichlorosilane, which is available at very low cost. Thus, the use of 1,1,3,3-tetramethyl-1,3-dichloro-1,3-disiloxane, which is obtainable from the inexpensive dimethyldichlorosilane, as starting material in the process of the present invention is extremely profitable on an economic basis.

## Reduction step

In the process of the present invention, the starting material 1,1,3,3-tetramethyl-1,3-dichloro-1,3-disiloxane (hereinafter referred to simply as "the dichlorodisiloxane") is reduced by use of a metal hydride, whereby the 1,1,3,3-tetramethyl-1,3-disiloxane intended is easily obtainable. The reduction step can be formulated as follows:

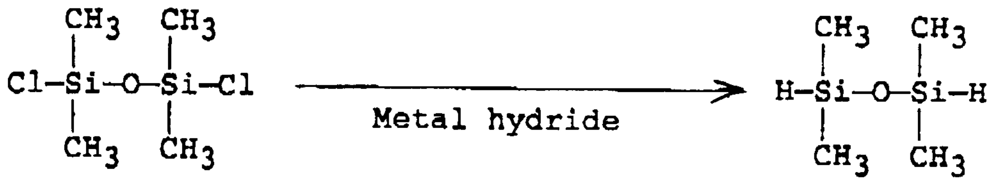


The metal hydride for use in the reduction step includes, for example, lithium aluminum hydride ($LiAlH_4$), sodium aluminum hydride ($NaAlH_4$), lithium borohydride ($LiBH_4$), lithium hydride (LiH), sodium hydride (NaH), etc. These metal hydrides may be used either singly or in combination of two or more. Among these, lithium aluminum hydride and sodium aluminum hydride are particularly preferred. In general, such metal hydrides are used preferably in an amount of from 0.5 to 2 mole, more preferably from 0.6 to 1.2 mole, per mole of the starting dichlorodisiloxane.

The reduction reaction by use of the metal hydride is, in general, carried out in an organic solvent. Preferably, the reduction reaction is carried out by adding the dichlorodisiloxane dropwise to a solution of the metal hydride in an organic solvent. The organic solvent may be any one that does not hinder the reduction reaction. An ether solvent such as diethyl ether and tetrahydrofuran is used preferably. The reduction reaction is carried out preferably in an inert gas atmosphere, such as nitrogen gas.

The reduction reaction is preferably carried out at a temperature of from 0 to 50°C, more preferably from 0 to 20°C. Suitable reaction times, which depend on the kind of the metal hydride used, the reaction temperature, etc., are normally from about 1 to about 5 hours.

After the reduction reaction is finished, the excess metal hydride is treated with alcohol such as methanol, ethanol, etc. Subsequently, an aqueous acid solution such as diluted hydrochloric acid is added to the reaction system, followed by separation of the liquids, washing with water and distillation, whereby the 1,1,3,3-tetramethyl-1,3-disiloxane intended is obtainable in a high yield.

## EXAMPLES

### Example 1

A 300-ml three-necked flask was equipped with a reflux condenser having a calcium chloride-packed pipe fitted to its end, a thermometer, a dropping funnel fitted with a gas inlet pipe, and a magnetic stirrer.

The flask was charged with 2.7 g of $NaAlH_4$ in a stream of nitrogen, and then with 30 g of tetrahydrofuran. The flask was cooled to 0°C in an ice-water bath. While the flask was kept cooled, 10 g of 1,1,3,3-tetramethyl-1,3-dichloro-1,3-disiloxane was added dropwise to the flask with stirring the reaction mixture and controlling the rate of dropwise addition so as to maintain the reaction mixture at a temperature of from 0 to 20°C.

On completion of the dropwise addition, the reaction mixture was stirred at room temperature for 2 hours. After the reaction was completed, the flask was again cooled in an ice-water bath. Then, 5 g of methanol and 30 g of diluted hydrochloric acid were sequentially added to the reaction mixture, and the resulting oil layer was separated from the rest. The oily matter thus separated was washed with water and distilled, to give 5.6 g of a reaction product (yield: 85%).

The reaction product thus obtained was analyzed by $^1$H-NMR and infrared spectroscopy. The results were as follows:

$^1$H-NMR: (solvent: $CCl_4$)
$\delta$ (ppm)
0.30-0.33 (d, Si-$CH_3$, 12H)
4.61-4.90 (m, Si-H , 2H)

Infrared absorption spectrum:
The chart obtained is shown in Figure 1.
Si-H : 2130 $cm^{-1}$
Si-$CH_3$ : 1255 $cm^{-1}$
Si-O-Si : 1070 $cm^{-1}$

By the above analytical results, the reaction product was ascertained to be 1,1,3,3-tetramethyl-1,3-disiloxane.

### Example 2

A reduction reaction, washing with water and distillation were carried out in the same manner as in Example 1 except for using 1.98 g of $LiAlH_4$ in place of $NaAlH_4$. As a result, 5.9 g of a reaction product was obtained (yield: 93%).

The reaction product thus obtained was analyzed by $^1$H-NMR and infrared spectroscopy. The results were as follows:

$^1$H-NMR: (solvent: $CCl_4$)
$\delta$ (ppm)
0.31-0.34 (d, Si-$CH_3$, 12H)
4.59-4.90 (m, Si-H , 2H)

Infrared absorption spectrum:
The chart obtained is shown in Figure 2.
Si-H : 2130 $cm^{-1}$
Si-$CH_3$ : 1255 $cm^{-1}$
Si-O-Si : 1065 $cm^{-1}$

The reaction product was ascertained by the analytical data to be 1,1,3,3-tetramethyl-1,3-disiloxane.

## Claims

1. A process for preparing 1,1,3,3-tetramethyl-1,3-disiloxane, characterized in that it comprises the step of reducing 1,1,3,3-tetramethyl-1,3-dichloro-1,3-disiloxane by a metal hydride.

2. The process according to claim 1, wherein the metal hydride is at least one compound selected from the group consisting of lithium aluminum hydride ($LiAlH_4$), sodium aluminum hydride ($NaAlH_4$), lithium borohydride ($LiBH_4$), lithium hydride (LiH) and sodium hydride (NaH).

3. The process according to claim 1 or 2, wherein the metal hydride is used in an amount of from 0.5 to 2 moles per mole of 1,1,3,3-tetramethyl-1,3-dichloro-1,3-disiloxane.

4. The process according to any of claims 1 to 3, wherein the reduction reaction is carried out in an organic solvent in an inert gas atmosphere.

5. The process according to any of claims 1 to 4, wherein the reduction reaction is carried out at a temperature of from 0 to 50 °C.

6. The process according to any of claims 1 to 5, wherein 1,1,3,3-tetramethyl-1,3-dichloro-1,3-disiloxane is added dropwise to a solution of the metal hydride in an organic solvent.

FIG. 1

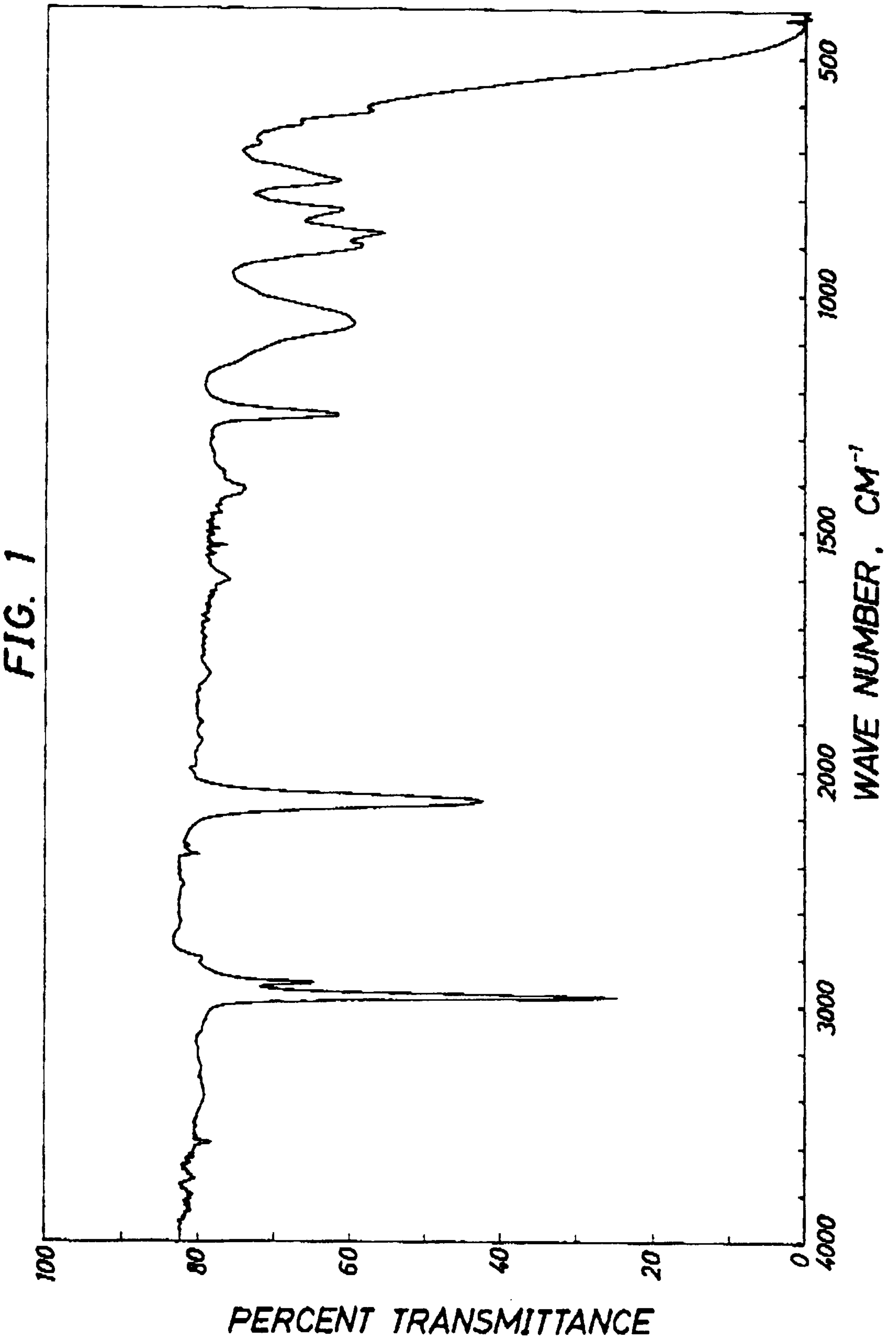
100
80
60
40
20
0
PERCENT TRANSMITTANCE
4000
3000
2000
1500
1000
500
WAVE NUMBER, CM⁻¹

FIG. 2

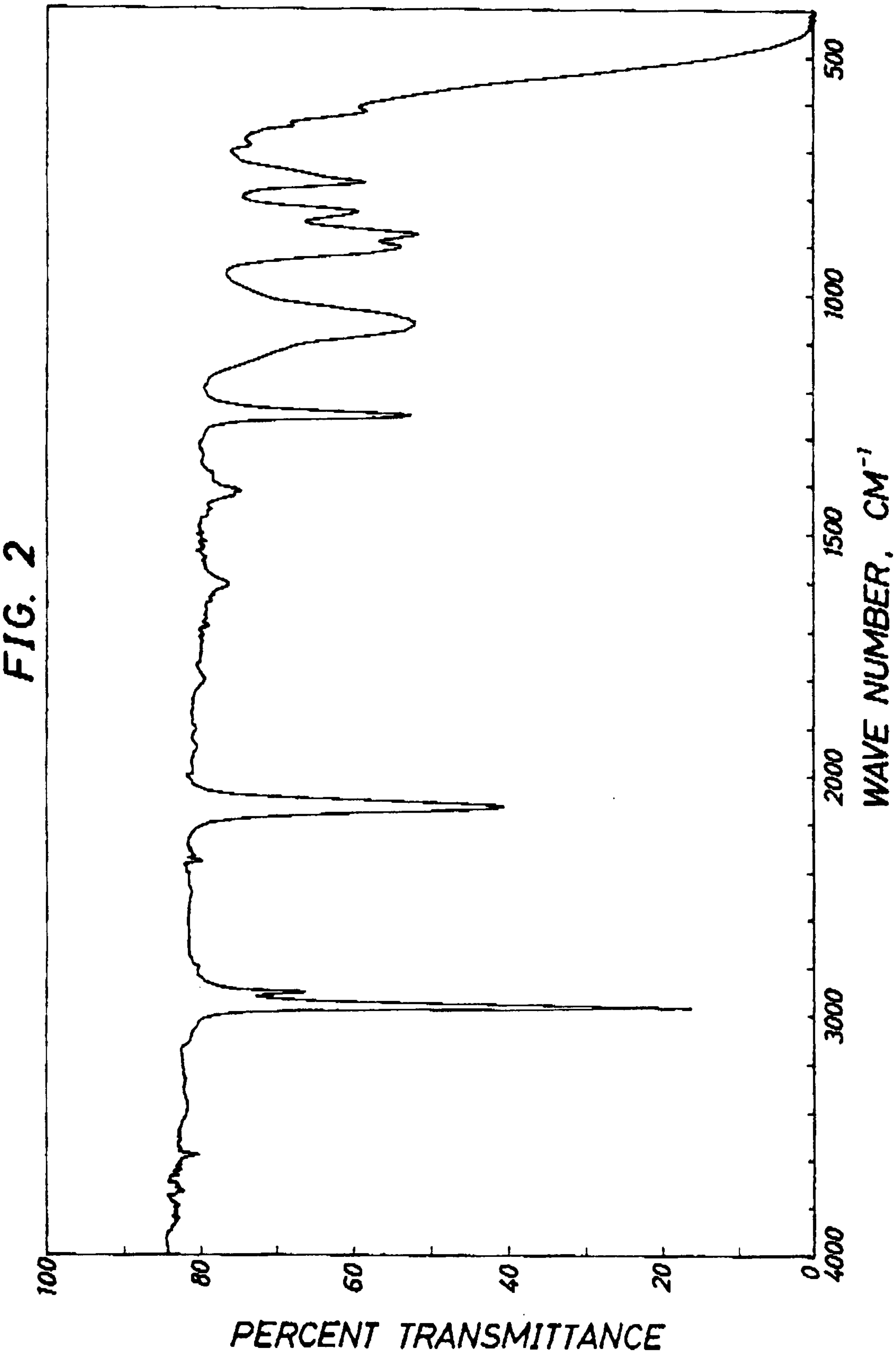

100
80
60
40
20
0
PERCENT TRANSMITTANCE
4000
3000
2000
1500
1000
500
WAVE NUMBER, CM-1

European Patent Office

# EUROPEAN SEARCH REPORT

Application Number

**EP 91 11 5774**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL ABSTRACTS, vol. 91, 1979, page 694, abstract no. 211475a, Columbus, Ohio, US; J. CHRUSCIEL et al.: "Reduction of alpha-omega-dichloropoly(dimethylsiloxanes) with lithium aluminium hydride", & POL. J. CHEM. 1979, 53(6), 1383-6 * Abstract * | 1-6 | C 07 F 7/08 |
| X | DE-B-1 085 875 (E. HUSEMANN) * Whole document * | 1-6 | |
| X | DE-A-1 929 902 (GENERAL ELECTRIC CO.) * Whole document; in particular example 4 * | 1-6 | |
| A | US-A-4 291 167 (R.J. ALLAIN et al.) * Whole document * | 1-6 | |
| A | DE-A-1 936 069 (TEXAS INSTRUMENTS, INC.) | | |

TECHNICAL FIELDS SEARCHED (Int. Cl.5)

C 07 F 7/00

The present search report has been drawn up for all claims

| Place of search | Date of completion of search | Examiner |
|---|---|---|
| The Hague | 28 October 91 | RINKEL L.J. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document